# EUROPÄISCHE PATENTSCHRIFT

(11) **EP 0 374 631 B1**
(45) Veröffentlichungstag und Bekanntmachung des Hinweises auf die Patenterteilung: **22.09.1993**
(21) Anmeldenummer: 89122665.6
(22) Anmeldetag: 08.12.1989
(51) Int. Cl.: C01B 13/02, B01D 53/04

(54) **Verfahren zur adsorptiven Sauerstoffanreicherung von Luft mit Mischungen aus Ca-Zeolith A Molekularsieben mittels Vakuum-Swing-Adsorption**
Process for the oxygen concentration in air by means of vacuum-swing-adsorption using mixtures of CA-zeolit A molecular sieves
Procédé d'enrichissement d'oxygène de l'air par adsorption sous vide alternée en utilisant des mélanges de tamis moléculaires de zéolithes A contenant du calcium

(30) Priorität: 21.12.1988 DE 3842930
(43) Veröffentlichungstag der Anmeldung: 27.06.1990
(73) Patentinhaber: BAYER AG, 51368 Leverkusen (DE)
(72) Erfinder: Reiss, Gerhard, Dipl.-Ing., D-5090 Leverkusen (DE)

(56) Entgegenhaltungen:
- EP-A- 0 170 026
- EP-A- 0 237 074
- PATENT ABSTRACTS OF JAPAN vol. 11, no. 379 (C-463)(2826) 10 Dezember 1987, & JP-A-62 148304 (NIPPON SANSO K.K.) 2 Juli 1987,

## Beschreibung

Die vorliegende Erfindung betrifft ein verbessertes Verfahren zur Sauerstoffanreicherung von Luft unter Einsatz der Vakuum-Swing-Adsorption.

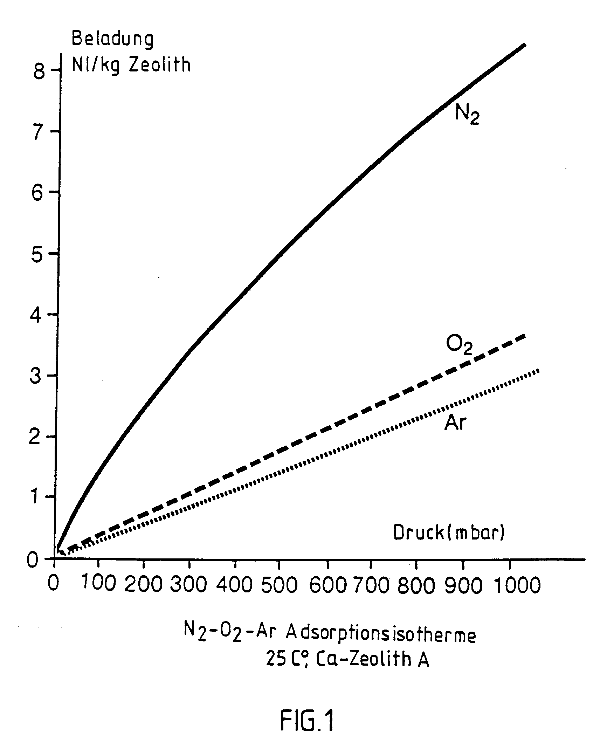

Die direkte Erzeugung von Sauerstoff aus Luft bei Umgabungstemperaturen wird industriell bereits umfangreich mit Molekularsieb-Zeolithen durchgeführt (vgl. z.B. Gas Review Nippon, S. 13, No. 5, 1985. Hierbei wird die bevorzugte Adsorption von Stickstoff gegenüber Sauerstoff (s. Fig. 1) ausgenutzt, d.h. Stickstoff der Luft wird abdorbiert, die weniger stark adsorbierten Komponenten wie Sauerstoff und Argon werden beim Durchströmen von Luft durch eine Zeolithschüttung am Austritt dieser Schüttung als Produkt aufgefangen. Die Desorption des adsorbierten Stickstoffs kann z.B. durch Evakuieren der Schüttung erfolgen. Für diesen Fall bezeichnet man diesen Prozeß "VSA" (= Vakuum Swing Adsorption), im Gegensatz zur ebenfalls bekannten "PSA" (= Pressure Swing Adsorption). Einen kontinuierlichen Prozeß erreicht man im VSA-Prozeß durch folgende Verfahrensschritte: a) Durchleiten von Luft durch eine Zeolithschüttung bei z.B. 1 atm; an der Austrittseite wird O₂-reiches Gas abgezogen; b) Evakuieren der Schüttung mit einer Vakuumpumpe auf einen Unterdruck von etwa 100 bis 300 mbar im Gegenstrom der Luftströmung; c) Befüllen der Schüttung mit O₂-Produkt auf 1 atm im Gegenstrom zur Luftströmung.

Bedingt durch diese drei Schritte hat man meist drei Zeolithschüttungen, d.h. Adsorber, die zyklisch betrieben werden.

In Patent Abstract of Japan, Vol. 11, No, 379 (C-463) [2862], 10.12.1987 wird ein Apparat zur Erzeugung hoher Konzentrationen an gasförmigem Sauerstoff mittels "Pressure Swing Adsorption" beschrieben, der aus mehreren Adsorptionssäulen besteht, die wiederum mit zwei unterschiedlichen zeolithischen Adsorptionsmitteln gefüllt sind, Um die Effektivität zu steigern, wird dabei die Säule zur Gaseintrittsseite mit einem Zeolith, der eine hohe Selektivität bei niedrigen Temperaturen aufweist, gefüllt, während zur Gasaustrittsseite ein Zeolith, der eine hohe Selektivität und große Adsorptionskapazität bei Raumtemperatur aufweist, verwendet wird.

Die Wirtschaftlichkeit dieser Anlagen wird durch die Investition wie Adsorptionsmittelmenge, Vakuumpumpengröße und insbesondere durch die Betriebskosten wie Stromverbrauch der Vakuumpumpe beeinflußt. Ziel jeder Entwickung ist deshalb die Optimierung zwischen Molekularsiebmenge, Vakuumpumpengröße und Energieverbrauch der Vakuumpumpe. Bisher ging die Entwicklung des Molekularsiebes in Richtung hoher Stickstoffadsorption, wodurch zwangsläufig die Zeolithmenge reduzeirt werden konnte.

Aufgabe der vorliegenden Erfindung war es, ein energiegünstiges Verfahren zu finden. Es wurde nun gefunden, daß im Falle der O₂-Anreicherung von Luft mittels des VSA-Prozesses mit Ca-Zeolith A der Energieverbrauch der Vakuumpumpe reduziert werden kann, wenn die Zeolithschüttung eines Adsorbers aus separaten Schüttungen zweier oder dreier Molekuarsiebe des Types Ca-Zeolith A verschiedener Adsorptionsvermögen für Stickstoff besteht wobei sich in der Lufteintrittsseite des Adsorbers die Zeolithschüttung mit niedrigster Stickstoffadsorption und an der Adsorptionsaustrittsseite die Zeolithschüttung mit höchster Stickstoffadsorption befindet.

Gegenstand der vorliegenden Erfindung ist somit ein Verfahren zur Sauerstoffanreicherung von Luft mittels der Vakuum-Swing-Adsorption (VSA) mit Ca-Zeolith-A-Molekularsieben, welches dadurch gekennzeichnet ist, daß die Adsorber der VSA-Anlagen mit Ca-Zeolith-A Molekularsieben, die unterschiedliche Adsorptionscharakteristika aufweisen, gefüllt werden.

Das erfindungsgemäße Verfahren wird prinzipiell wie herkömmliche PSA bzw. VSA-Verfahren durchgeführt. Einschlägige Verfahren werden z.B. in EP-A 0 158 268 beschrieben.

Bei den eingesetzten Ca-Zeolith-A-Molekularsieben handelt es sich ebenfalls um bekannte Materialien, die z.B. aus DE-OS 34 24 144 und DE-OS 37 18 673 bekannt sind.

Die Füllung der Adsorber kann in beliebiger Weise erfolgen, es muß nur gewährleistet sein, daß die unterste Schicht des Adsorbers aus Molekularsieb mit der geringsten Adsorptionsleistung für Stickstoff besteht.

Weitere Parameter die nach Möglichkeit einzuhalten sind, sind folgende:
Bei Adsorption des Stickstofs unter Überdruck erfolgt die Desorption des Stickstoffs durch reine Druckabsenkung z.B. auf 1 atm mit nachfolgender Desorption mittels einer Vakuumpumpe, mit oder ohne Spülung mit Sauerstoff. Die Temperatur der zu trennenden Luft liegt zwischen -20°C und +50°C, wobei diese Luft auch feucht sein kann.

In vielen Fällen kann es angebracht sein, zur Trocknung des Gastroms zusätzlich eine Schicht bestehend z.B. aus Kieselgel vor die eigentliche Adsorptionschicht einzusetzen.

Der erfindungsgemäße VSA-Prozeß soll in folgenden Beispielen näher erläutert werden:
Für alle Beispiele bleiben folgende Daten konstant:

| | |
|---|---|
| Adsorberinnendurchmesser | 550 mm |
| Adsorberschütthöhe | 2500 mm |

mittelporiges Kieselgel am unteren Ende, 70 Liter pro Adsorber Restschüttung Ca-Zeolith A in granulierter Form der Körnung 2-3 mm, Schüttgewicht etwa 650 g/l.

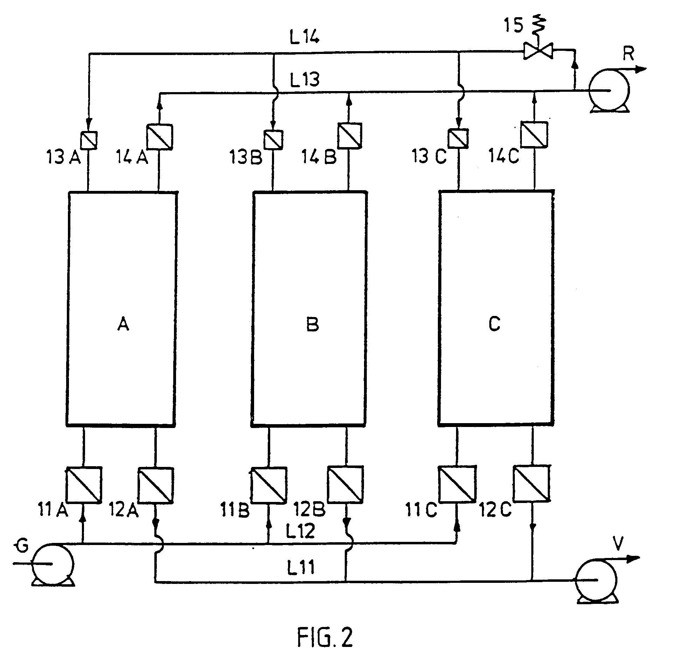

Das Anlagenschema ist aus Fig. 2 zu erkennen, woraus sich auch der Prozessablauf ergibt:
Umgebungsluft wird über Gebläse G, Ventil 11A in Adsorber A (bei 1 bar (abs), 20°C mit 75 % rel. Feuchte) eingeleitet. Sauerstoffreiches Gas wird über Ventil 14A, Gebläse R (bei 1 bar (abs)) als Produkt abgezogen. Zeit der Lufttrennung ist 1 Minute. Ventile 12A, 13A sind geschlossen.

Gleichzeitig wird Adsorber B über Ventil 12B und einer Vakuumpumpe V innerhalb einer Minute auf 150 mbar evakuiert, wobei die Ventile 11B, 13B, 14B des Adsorbers B geschlossen sind. Als Vakuumpumpe wurde eine über ein Getriebe einstellbare Ölringpumpe verwendet, wobei deren Fördermenge stets bei 1 bar (abs), 25°C gemessen wurde.

Gleichzeitig wird Adsorber C innerhalb einer Minute mit Produktsauerstoff über Ventil 15, Ventil 13C, von 150 mbar auf 1 bar (abs) aufgefüllt, wobei Ventile 11C, 12C, 14C geschlossen sind.

### Beispiel 1 (Vergleich)

Es wurde Ca-Zeolith A-Granulat gemäß der DE-OS 37 18 673, Beispiel 3) eingesetzt. Die H₂O-Restbeladung des aktivierten Zeoliths lag unter 0,5 Gew.-% (nach DIN 8948, P₂O₅-Methode), die Stickstofadsorption betrug bei 1 bar (abs), 25°C, 14 Nl/kg. Die Zeolithmenge pro Absorber betrug 346 kg. Gemäß obiger Verfahren, Fig. 2 wurde eine O₂-Produktmenge von 20,5 Nm³/h, mit 93 % O₂-Gehalt gewonnen. Die Vakuumpumpe hatte eine Saugleistung von 546 m³/h mit einer Stromaufnahme von 11,42 KW. Der spezifische Energieverbrauch betrug demnach 0,599 KWh/Nm³/O₂.

### Beispiel 2 (Vergleich)

Es wurde Ca-Zeolith-Granulat entsprechend der DE-OS 34 24 144, Beispiel 2) eingesetzt (340 kg/Adsorber). Die H₂O-Restbeladung des aktivierten Zeoliths lag unter 0,5 Gew.-%. Die Stickstoffbeladung betrug bei 25°C, 1 bar (abs), 7,5 Nl/kg. Gemäß obigem VSA-Verfahren wurde eine Produktmenge von 14,55 Nm³/h (93 % O₂) gewonnen. Die Vakuumpumpe hatte eine Saugleistung von 450 m³/h mit einem Energieverbrauch von 9,11 KW. Der spezifische Energieverbrauch betrug deshalb 0,674 KWh/Nm³.

### Beispiel 3 (erfindungsgemäß)

Die Adsorber wurden über der Kieselgelschicht mit 183 dm³ MS-Zeolith des Beispiels 2 und darüber mit 341 dm³ MS-Zeolith des Beispiels 1 (35 % zu 65 %) gefüllt. Es konnte eine O₂-Produktmenge von 20,3 Nm³/h (93 % O₂) gewonnen werden. Die Vakuumpumpe hatte hierbei eine Ansaugleistung von 517 m³/h und eine Stromaufnahme von 10,48 KW, d.h. 0,554 KWh/Nm³ O₂.

### Beispiel 4

Die Adsorber wurden aus drei Mischdungen aus Ca-Zeolith A gefüllt. Die unterste Zone bestand aus 90 kg Zeolith des Beispiels 2. Darüber befand sich eine Schicht von 60 kg eines Ca-Zeolith A-Granulats, hergestellt gemäß der Patentschrift (DE-OS 37 18 673, Beispiel 1) mit einer Stickstoffadsorption von 12 Nl/kg (1 bar, abs, 25°C). Am oberen Ende der Schüttung befand sich 195 kg Zeolithgranulat des Beispiels 1. Es wurde eine O₂-Produktmenge von 20,13 Nm³/h (93 % O₂) erzeugt, die Vakuumpumpengröße betrug 505 m³/h, der Energieaufwand 10,1 KW, d.h. der spezifische Energiebedarf betrug 0,53 KWh/Nm³ O₂.

### Beispiel 5 (Vergleich)

Die Zeolithschüttung bestand am oberen Ende des Adsorbers aus 224 kg Granulat des Beispiels 1 und am unteren Ende aus Na-Zeolith X (121 kg) gemäß der deutschen Patentschrift 2 016 838, mit einer N₂-Adsorption von 6,8 N1/kg bei 1 bar, abs. und 25°C. Die O₂-Produktrate lag bei 16,9 Nm³/h, die Pumpenkapazität betrug 520,5 m³/h, der Energieverbrauch der Pumpe betrug 10,63 KWh, d.h. die spezifische Leistung 0,629 KWh/Nm³.

Die Beispiele 3 und 4 zeigen den Vorteil der Mischung von Ca-Zeolith A-Mischungen mit unterschiedlichen Adsorptionsvermögen für Stickstoff, demgegenüber zeigt Beispiel 5, daß nicht allein die Abstufung der Schüttung gemäß der Stickstoffadsorption, sondern zusätzlich die separate Mischung des gleichen Zeolithtypes wesentlich wichtig ist.

## Patentansprüche

1. Verfahren zur Sauerstoffanreicherung von Luft mittels der Vakuum-Swing-Adsorption (VSA) mit Ca-Zeolith A-Molekularsieben, dadurch gekennzeichnet, daß die Adsorber der VSA-Anlagen mit Ca-Zeolith A-Molekularsieben, die unterschiedliche Adsorptionscharakteristika aufweisen, gefüllt werden.

2. Verfahren nach Anspruch 1, dadurch gekennzeichnet, daß die Rohgaseintrittsseite, d.h. die unterste Schicht des Adsorbers aus Ca-Zeolith A mit der niedrigsten Adsorptionsleistung für Stickstoff besteht, und sich am O₂-Produktende des Adsorbers eine Schicht Ca-Zeolith A mit der höchsten Adsorptionsleistung für Stickstoff befindet.

3. Verfahren nach einem der Ansprüche 1 oder 2, dadurch gekennzeichnet, daß der Übergang der Zeolithqualitäten vom Adsorbereintritt zum Adsorberaustritt durch mehrere Schichten nahezu fließend erfolgt.

## Claims

1. A process for the oxygen concentration of air by means of vacuum-swing adsorption (VSA) using Ca-zeolite A molecular sieves, characterised in that the adsorbers of the VSA apparatus are filled with Ca-zeolite A molecular sieves possessing different adsorption characteristics.

2. A process as claimed in Claim 1, characterised in that the crude gas input end, i.e the lowest layer of the adsorber, consists of Ca-zeolite A having the lowest adsorption capacity for nitrogen, and a layer of Ca-zeolite A having the highest adsorption capacity for nitrogen is located at the O₂-product end of the adsorber.

3. A process as claimed in one of Claims 1 or 2, characterised in that the transition between the zeolite qualities from the adsorber input to the adsorber output through a plurality of layers is virtually continuous.

## Revendications

1. Procédé d'enrichissement de l'air en oxygène par adsorption sous vide alterné (VSA), utilisant des tamis moléculaires constitués de zéolithes A contenant du Ca, caractérisé en ce que les dispositifs d'adsorption des installations de VSA sont remplis de tamis moléculaires constitués de zéolithes A contenant du Ca qui présentent des caractéristiques d'adsorption différentes.

2. Procédé selon la revendication 1, caractérisé en ce que le côté d'arrivée du gaz brut, c'est-à-dire la couche inférieure du dispositif d'adsorption est constituée de la zéolithe A contenant du Ca ayant le pouvoir adsorbant le plus faible vis-à-vis de l'azote et qu'une couche de la zéolithe A contenant du Ca ayant le pouvoir adsorbant le plus élevé vis-à-vis de l'azote se trouve à l'extrémité du dispositif d'adsorption par laquelle sort le produit enrichi en O₂.

3. Procédé selon la revendication 1 ou 2, caractérisé en ce que la transition entre les qualités des zéolithes de l'entrée du dispositif d'adsorption à sa sortie est effectuée à l'aide de plusieurs couches de façon presque fluide.
